# NEUE EUROPÄISCHE PATENTSCHRIFT

(11) **EP 2 363 051 B2**
(45) Veröffentlichungstag und Bekanntmachung des Hinweises auf die Entscheidung über den Einspruch: **27.12.2017**
(45) Hinweis auf die Patenterteilung: 18.02.2015
(21) Anmeldenummer: 11001765.4
(22) Anmeldetag: 03.03.2011
(51) Int. Cl.: A47J 31/60

(54) **Kaffeemaschine und Verfahren zur Reinigung derselben**
Coffee machine and method for cleaning the same
Machine à café et son procédé de nettoyage

(30) Priorität: 05.03.2010 DE 102010010516
(43) Veröffentlichungstag der Anmeldung: 07.09.2011
(73) Patentinhaber: Kaffee Partner Service GmbH, 49134 Wallenhorst (DE)
(72) Erfinder: Krämer, Torsten, 32120 Hiddenhausen (DE)
(74) Vertreter: Aulich, Martin

(56) Entgegenhaltungen:
- EP-A1- 1 656 863
- EP-A1- 1 797 801
- EP-A1- 1 911 382
- EP-B1- 1 578 235
- EP-B1- 1 688 073
- DE-U1- 20 205 626
- DE-U1-202010 010 509
- US-A- 3 390 626
- US-A1- 2004 009 281
- US-A1- 2007 251 459

## Beschreibung

Die vorliegende Erfindung betrifft eine Kaffeemaschine mit den Merkmalen des Oberbegriffs des Anspruchs 1 und ein Verfahren zur Reinigung einer Kaffeemaschine mit den Merkmalen des Oberbegriffs des Anspruchs 8.

Kaffeemaschinen mit Milchmodul, insbesondere Kaffeevollautomaten, sind bekannt. Mit einem solchen Milchmodul kann dem von der Maschine erzeugten Kaffeegetränk Milch unterschiedlicher Art zugeführt werden, beispielsweise in aufgeschäumter Form sowie als Kalt- oder Warmmilch. Hierzu wird bei bekannten Kaffeemaschinen des Standes der Technik Milch mittels eines Ansaugschlauchs aus einem Milchvorratsbehälter angesaugt und in der Regel einer sogenannten Aufschäumeinrichtung mit geeigneter Ausgabeeinheit zugeführt.

Problematisch bei Kaffeemaschinen mit Milchmodul ist jeweils die Reinigung der milchführenden Bauteile desselben. Denn Milch verdirbt sehr schnell, was zu gefährlicher Bakterienbildung führt. Insbesondere bei Kaffeevollautomaten ist es dabei wünschenswert, dass die Reinigung des Milchmoduls bzw. der milchführenden Bauteile desselben nahezu voll-automatisch abläuft.

Dies ist bei denjenigen Kaffeevollautomaten, bei denen die milchführenden Bauteile mit chemischen Reinigungsmittel gereinigt werden, nicht der Fall. Ein Benutzer, der eine Reinigung des Milchmoduls vornehmen möchte, muss jedes Mal vor dem Starten eines geeigneten Reinigungsprogramms des Kaffeevollautomaten ein separates Gefäß bereit-halten, in das er für den spezifischen Reinigungsbetrieb flüssiges Reinigungsmittel füllen muss.

Dieses Gefäß muss der Bediener in der Regel an der Position des Milchvorratsbehälters anordnen. Anschließend muss er den Milchansaugschlauch, der im Standardbetrieb des Automaten in dem Vorratsbehälter eingehängt ist, um die Milch aus diesem ansaugen zu können, nunmehr in den Reinigungsbehälter einhängen. Anschließend wird die Reinigungsflüssigkeit durch den Ansaugschlauch in der gleichen Weise angesaugt, wie dies im Regelbetrieb ansonsten mit der Milch geschieht, etwa durch Einschalten bzw. Verwenden einer geeigneten Milchpumpe.

Aus der EP 1 656 863 ist eine selbstreinigende Aufschäumeinrichtung bekannt. Diese kann auch Teil einer Kaffeemaschine sein. Zur Reinigung der milchführenden Bauteile verfügt die Einheit über ein Reservoir mit Reinigungsmittel sowie ein Reservoir mit Milch. Die beiden Reservoirs sind in einem Doppelbehälter angeordnet Im Normalbetrieb steht der Milcheinlass der Aufschäumeinrichtung mit dem Milchreservoir in Verbindung. Im Reinigungsbetrieb steht der Milcheinlass mit dem Reinigungsmittelreservoir in Verbindung. Hierzu wird die Aufschäumeinrichtung zwischen den beiden Reservoirs hin- und her bewegt.

Ausgehend von dem eingangs genannten Stand der Technik ist es wünschenswert, eine Kaffeemaschine der eingangs genannten Art anzugeben, bei der das Reinigen des Milchmoduls möglichst weitgehend automatisierbar ist. Des Weiteren ist es Aufgabe der vorliegenden Erfindung, ein Verfahren anzugeben, mit dem eine derartige Kaffeemaschine gereinigt werden kann.

Diese Aufgabe wird gelöst durch eine Kaffeemaschine mit den Merkmalen des Anspruchs 1 sowie ein Verfahren mit den Merkmalen des Anspruchs 8.

Eine erfindungsgemäße Kaffeemaschine, vorzugsweise ein Kaffeevollautomat. nämlich die Reinigungseinrichtung derselben, verfügt über ein eigenes Reinigungsmittelreservoir, aus dem das Reinigungsmittel während des Reinigungsbetriebs automatisch entnommen wird.

Das Reinigungsmittelreservoir ist dabei ein auch außerhalb des Reinigungsbetriebs der Reinigungseinrichtung mit der Kaffeemaschine, vorzugsweise mit deren Gehäuse, verbundenes Bauteil der Kaffeemaschine. Bevorzugt ist das Reinigungsmittelreservoir dabei im Inneren des Gehäuses der Kaffeemaschine angeordnet.

Vorteilhafterweise ist es erfindungsgemäß demnach nicht mehr notwendig, dass ein Benutzer jedes Mal in Vorbereitung des jeweiligen Reinigungsbetriebs des Milchmoduls händisch ein Gefäß mit Reinigungsmittel unterhalb eines Milchansaugschlauchs des Milchmoduls positioniert. Vielmehr ist es nur noch erforderlich, das Reinigungsmittel außerhalb und unabhängig von dem eigentlichen Reinigungsbetrieb in das Reinigungsmittel-reservoir zu füllen. Abhängig von der Reservoirgröße kann dann ein Benutzer den Reinigungsbetrieb der Kaffeemaschine viele Male in Gang setzen. Ein Zuführen von Reinigungsmittel für jeden einzelnen Reinigungsbetrieb von außen ist - anders als im Stand der Technik-nicht mehr notwendig.

Zweckmäßigerweise ist das Reservoir naturgemäß derart groß, dass die Kaffeemaschine viel- bzw. mehrfach einen vollständigen Reinigungszyklus durchlaufen kann, also mehrfach in den Reinigungsbetrieb versetzt werden und das entsprechende Reinigungsprogramm ausführen kann, ohne dass Reinigungsmittel nachgefüllt werden muss.

Vorzugsweise wird das Reinigungsmittelreservoir gebildet durch einen Vorratsbehälter, in dem das insbesondere flüssige Reinigungsmittel gespeichert bzw. gelagert wird, etwa als Konzentrat oder als gebrauchsfertige Lösung. Weiter ist auch denkbar, Reinigungstabs oder Reinigungspulver einzusetzen. Naturgemäß liegt es demnach im Rahmen der Erfindung, dem Reinigungsmittel jeweils Wasser zuzuführen bzw. dieses mit Wasser zu vermischen.

Das Reinigungsmittel ist erfindungsgemäß ein im Stand der Technik bekannter Milchreiniger, der in der Lage ist, die milchführenden Bauteile der Kaffeemaschine bzw. des Milchmoduls gründlich zu reinigen. Bevorzugt handelt es sich dabei um chemische Spezialreiniger. Solche Spezialreiniger wirken üblicherweise desinfizierend und sind in der Lage, die In den milchführenden Bauteilen, insbesondere in den Leitungen des Milchmoduls vorhandenen Milchfette und/oder den Milchstein optimal zu entfernen. Häufig handelt es sich bei den Spezialreinigern um alkalische Reiniger.

Kaffeemaschinen bzw. Kaffeevollautomaten verfügen in der Regel über einen Heißwasser- und/oder Dampferzeuger. Erfindungsgemäß ist dieser Heißwasser- und/oder Dampferzeuger zumindest im Reinigungsbetrieb der Reinigungseinrichtung unmittelbar oder mittelbar mit dem mindestens einen milchführenden Bauteil (flüssigkeitsleitend) verbunden, sodass aus dem Heißwasser- und/oder Dampferzeuger stammendes, insbesondere heißes Wasser während des Reinigungsbetriebs durch das milchführende Bauteil geleitet werden kann.

Eine mittelbare (flüssigkeitsleitende) Verbindung von Heißwasser- und/oder Dampferzeuger mit dem milchführenden Bauteil ist im Rahmen der vorliegenden Erfindung beispielsweise gegeben, wenn zwischen dem Heißwasser- und/oder Dampferzeuger und dem milchführenden Bauteil ein Zwischenbehälter angeordnet ist, der von dem Heißwasser-und/oder Dampferzeuger befüllt wird. Ein derartiger Zwischenbehälter hat dabei die Funktion, das aus dem Heißwasser- und/oder Dampferzeuger stammende Wasser zwischenzuspeichern. Das derart zwischengespeicherte Wasser wird (erst) dann weitergeleitet, wenn dies steuerungstechnisch bzw. im Rahmen des Programmablaufs des Reinigungsprogramms der Kaffeemaschine gewollt ist.

Durch die unmittelbare/mittelbare Verbindung von Heißwasser- und/oder Dampferzeuger mit dem milchführenden Bauteil ist es beispielsweise möglich, mit dem Heißwasser-und/oder Dampferzeuger Wasser auf eine hohe, eine Desinfektion des mindestens einen milchführenden Bauteils erlaubende, Temperatur zu bringen, und das Milchmodul mit diesem heißen Wasser anschließend zu spülen bzw. zu reinigen. Mit anderen Worten wird das von dem Erzeuger erhitzte Wasser durch das milchführende Bauteil geleitet.

Was das/die milchführende(n) Bauteil(e) betrifft, so wird erfindungsgemäß mindestens die Milchleitung gereinigt, die von dem Vorratsbehälter, in dem die von dem Milchmodul anzusaugende Milch gespeichert bzw. gelagert wird, zu einer Aufschäumeinrichtung des Milchmoduls führt.

Erfindungsgemäß ist des Weiteren vorgesehen, dass stromab des Reinigungsmittelreservoirs, vorzugsweise des Reinigungsmittelvorratsbehälters, und stromab des Heißwasser-und/oder Dampferzeugers jeweils Leitungen angeordnet sind, durch die das Reinigungsmittel bzw. das Wasser fließen können, und die stromab unmittelbar oder mittelbar in eine gemeinsame Leitung münden bzw. an diese angeschlossen sind, durch die während des Reinigungsbetriebs wahlweise das Reinigungsmittel, bevorzugt vermischt mit Wasser, oder vorzugsweise heißes, insbesondere nicht mit Reinigungsmittel vermischtes Wasser in Richtung des milchführenden Bauteils geleitet werden kann.

Hierdurch kann entsprechend wahlweise entweder das Reinigungsmittel - gegebenenfalls vermischt mit Wasser - durch das milchführende Bauteil geleitet werden oder vorzugsweise aus dem Heißwasser- und/oder Dampferzeuger Stammendes, insbesondere klares oder wenigstens nicht mit Reinigungsmittel versetztes Wasser.

Die Vermischung des Reinigungsmittels mit Wasser ist insbesondere, aber nicht nur dann sinnvoll, falls das Reinigungsmittel als Konzentrat vorliegt, das ohnehin erst mit Wasser vermischt werden soll/muss, bevor es durch das mindestens eine milchführende Bauteil geleitet werden soll/kann.

Die Vermischung des Reinigungsmittels mit heißem Wasser kann zudem sinnvoll sein, um das Reinigungsmittel auf eine höhere Temperatur zu bringen und dadurch dessen Wirksamkeit im Rahmen des nachfolgenden entsprechenden Reinigungsvorgangs zu verbessern.

Falls eine solche Vermischung bzw. Gemischbildung erwünscht ist, verfügt die Kaffeemaschine bzw. die Reinigungseinrichtung zweckmäßiger Weise über einen einen Mischraum aufweisenden Mischkörper, in dem das Reinigungsmittel einerseits und das Wasser andererseits miteinander vermischt werden. In einfachster Weise können die jeweilige Reinigungsmittelleitung und die entsprechende Wasserleitung, die stromab des Reinigungsmittelreservoirs bzw. des Heißwasser- und/oder Dampferzeugers jeweils zu der gemeinsamen Leitung führen bzw. die jeweils mit dieser verbunden sind, jeweils mittels eines Y-oder T-Verbindungsstücks miteinander verbunden sein. In diesem Fall wäre der Mischkörper das Y- oder T-Verbindungsstück.

Der vorstehend beschriebene Aufbau der erfindungsmäßen Kaffeemaschine erlaubt es, innerhalb des Reinigungsbetriebes bzw. innerhalb eines vollständigen Durchlaufs eines geeigneten Reinigungsprogramms der Kaffeemaschine verschiedene einzelne Reinigungsvorgänge nacheinander durchzuführen.

Beispielsweise kann ein Reinigungsvorgang vorgesehen sein, in dem das Reinigungsmittel, insbesondere vermischt mit heißem Wasser, durch das mindestens eine milchführende Bauteil geleitet wird, um dies durch das Reinigungsmittel bzw. durch das Gemisch weitgehend und effektiv vorzureinigen.

Es kann ein weiterer, sich insbesondere an den vorgenannten anschließender Reinigungsvorgang vorgesehen sein, in dem von dem Heißwasser- und/oder Dampferzeuger erwärmtes, heißes, insbesondere nicht mit Reinigungsmittel vermischtes Wasser durch die milchführenden Bauteile geleitet wird, um eine nachfolgende Desinfektion des milchführenden Bauteils zu erreichen.

Schließlich kann vorgesehen sein, nach dem Durchleiten des heißen Wassers kaltes bzw. nicht erwärmtes, insbesondere nicht mit Reinigungsmittel vermischtes Wasser durch das milchführende Bauteil zu leiten, um heißes Restwasser zu entfernen und/oder um das mindestens eine milchführende Bauteil abzukühlen. Das nicht erwärmte bzw. das kalte Wasser stammt in der Regel aus einem zentralen Wasseranschluss, an den die Kaffeemaschine angeschlossen ist oder aus einem zentralen Wasserbehälter der Kaffeemaschine. Dabei ist natürlich denkbar, dass das kalte Wasser bei ausgeschaltetem Heißwasser- und/oder Dampferzeuger durch diesen hindurch geleitet wird, bevor es zu dem milchführenden Bauteil gelangt.

In weiterer Ausbildung der Erfindung ist vorgesehen, vor dem Reinigungsvorgang, in dem das Reinigungsmittel bzw. das Reinigungsmittelgemisch durch das milchführende Bauteil geleitet wird, sowie vor dem Reinigungsvorgang, in dem das insbesondere nicht mit Reinigungsmittel vermischte heiße Wasser durch dieses hindurch geführt wird, das milchführend Bauteil zunächst mit insbesondere nicht mit Reinigungsmittel vermischtem, kaltem Wasser durchzuspülen.

Was das Wasser betrifft, das durch das milchführende Bauteil geleitet wird, so stammt dieses vorzugsweise aus dem Zwischenbehälter, der zuvor entweder mit insbesondere nicht mit Reinigungsmittel vermischtem, kaltem Wasser befüllt worden ist oder mit insbesondere nicht mit Reinigungsmittel vermischtem, heißem Wasser, insbesondere mit aus dem Heißwasser- und/oder Dampferzeuger der Kaffeemaschine stammendem, heißen Wasser.

Die Kaffeemaschine, nämlich dessen Milchmodul, verfügt zweckmäßigerweise über einen unmittelbar oder mittelbar über eine Milchleitung mit der Aufschäumeinrichtung zum Aufschäumen der Milch verbundenen Milchbehälteranschluss. Der Milchbehälteranschluss ist dabei an dem der Aufschäumeinrichtung entgegengesetzten Ende der Milchanschlussleitung angeordnet. Der Milchbehälteranschluss kann bevorzugt ein geeignetes Schnellkupplungsteil sein, an dem ein mit einem entsprechenden Gegenstück ausgerüsteter Milchvorratsbehälter lösbar befestigt werden kann.

Für den Reinigungsbetrieb ist in einer besonders bevorzugten Ausführungsform der Erfindung vorgesehen, dass der Milchbehälteranschluss mit einem Reinigungsanschluss der Reinigungseinrichtung lösbar verbunden werden kann, dem im Reinigungsbetrieb das insbesondere aus dem Reinigungsmittelbehälter stammende Reinigungsmittel - gegebenenfalls vermischt mit Wasser - oder das insbesondere aus dem Heißwasser- und/oder Dampferzeuger stammende, insbesondere nicht mit Reinigungsmittel vermischte Wasser bzw. das Wasser aus dem Zwischenbehälter zugeleitet werden kann.

Das Schnellkupplungsteil des Milchbehälteranschlusses kann zur lösbaren Verbindung mit dem Reinigungsanschluss mit einem geeigneten, mit diesem zusammenwirkenden Schnellkupplungsteil des Reinigungsanschlusses verbunden werden bzw. mit diesem verbindbar sein.

Mit anderen Worten ist es in dieser Ausführungsform zur Reinigung des mindestens einen milchführenden Bauteils notwendig, dass ein Benutzer den Reinigungsanschluss mit dem Milchbehälteranschluss verbindet. Nach Herstellung dieser Verbindung kann das insbesondere aus dem Heißwasser- und/oder Dampferzeuger stammende, insbesondere nicht mit Reinigungsmittel vermischte Wasser und/oder das aus dem Reinigungsmittelbehälter stammende Reinigungsmittel, gegebenenfalls vermischt mit dem Wasser, durch das mindestens eine milchführende Bauteil geleitet werden.

Bevorzugt ist vorgesehen, dass der Reinigungsbetrieb der Kaffeemaschine bzw. das jeweilige Reinigungsprogramm - insbesondere nach händischer Betätigung eines geeigneten Bedienelementes der Kaffeemaschine durch einen Bediener - nur ausgelöst wird oder auslösbar ist, insofern mindestens die beiden folgenden Bedingungen kumulativ erfüllt sind:
a) Unter einer Ausgabeeinrichtung der Kaffeemaschine, insbesondere unter die Ausgabe der Aufschäumeinrichtung derselben, ist ein geeigneter Abwasserbehälter angeordnet, und
b) zwischen dem Reinigungsanschluss der Kaffeemaschine einerseits, dem im Reinigungsbetrieb insbesondere aus einem Reinigungsmittelvorratsbehälter stammendes Reinigungsmittel, insbesondere vermischt mit Wasser, zugeleitet wird oder insbesondere nicht mit Reinigungsmittel vermischtes Wasser, bevorzugt aus dem Heißwasser- und/oder Dampferzeuger stammendes Wasser, und einem Milchvorratsbehälteranschluss der Kaffeemaschine andererseits muss eine flüssigkeitsleitende Verbindung hergestellt sein.

Erfindungsgemäß ist insbesondere unter sicherheitstechnischen Gesichtspunkten vorgesehen, dass die Kaffeemaschine automatisch überprüft, ob diese vorgenannten Bedingungen erfüllt sind. Zu diesem Zweck ist jeweils mindestens ein Sensor vorgesehen, der automatisch erfasst, ob der Abwasserbehälter unter der Ausgabeeinrichtung angeordnet ist und/oder ob die leitende Verbindung zwischen dem Reinigungsanschluss und dem Milchvorratsbehälteranschluss hergestellt ist.

Mit anderen Worten muss ein Bediener zum einen die genannte Verbindung herstellen, zum anderen den Abwasserbehälter unter die Ausgabeeinrichtung stellen, bevor die ansonsten vollautomatische Reinigung möglich ist. Nur dann werden die eigentlichen Reinigungsvorgänge ausgeführt.

Vorteilhafterweise werden auf diese Weise gefährliche Fehlbedienungen vermieden. Es wird wirksam verhindert, dass der Benutzer, der den Reinigungsbetrieb in Gang setzt, mit heißem Wasser oder mit dem in der Regel Hautirretationen auslösenden Reinigungsmittel in Kontakt kommt, da das Reinigungsmittel und/oder das heiße Wasser nach Durchlaufen der milchführenden Bauteile aus der Ausgabeeinrichtung in den Abwasserbehälter fließen.

Als Sensor, mit dem erkannt werden kann, dass der Abwasserbehälter unterhalb der Ausgabeeinrichtung positioniert wurde, kann beispielsweise ein sogenannter Reed-Kontaktschalter verwendet werden. Der Abwasserbehälter muss in geeigneter Weise mit diesem Reed-Kontaktschalter zusammenwirken, indem er beispielsweise geeignete Magnete aufweist, die mit dem Reed-Kontaktschalter zusammenwirken. Es sind verschiedenste Ausführungsformen von geeigneten Sensoren denkbar.

In ähnlicher Weise kann über ein oder mehrere geeignete Sensoren abgefragt werden, ob der Reinigungsanschluss mit dem Milchanschluss verbunden wurde.

Insofern sowohl ein Reinigungsmittelbehälter verwendet wird als auch der Wasser-Zwischenbehälter, ist es sinnvoll, den Füllstand eines oder beider Behälter direkt oder indirekt zu erfassen. Eine indirekte Erfassung kann beispielsweise erfolgen, indem stromab des Reinigungsmittelbehälters und/oder stromab des Zwischenbehälters, insbesondere in der oben genannten gemeinsamen Leitung, ein Durchflussmesser angeordnet ist. Mit dem Durchflussmesser ist im Reinigungsbetrieb der Durchfluss des Reinigungsmittels, gegebenenfalls des mit Wasser vermischten Reinigungsmittels, und/oder des aus dem Zwischenbehälter stammenden, insbesondere nicht mit Reinigungsmittel vermischten Wassers messbar. Aus dem Durchfluss kann etwa mit Hilfe der Information des Anfangsfüllstandes des oder der Behälter auf die jeweiligen Ist-Füllstände rückgeschlossen werden.

Natürlich sind auch verschiedene andere, direkte Füllstandsmessverfahren bzw. -geräte verwendbar, die im Stand der Technik bekannt sind.

Naturgemäß weist eine erfindungsgemäße Kaffeemaschine eine Steuerungseinrichtung auf, die in geeigneter Weise ausgebildet ist, ein, mehrere oder sämtliche der oben genannten Funktionen des Reinigungsbetriebs der Maschine bzw. der Reinigungseinrichtung umzusetzen bzw. zu steuern.

In weiterer Ausbildung der Erfindung ist vorteilhafterweise vorgesehen, im Rahmen des Reinigungsbetriebs den Heißwasser- und/oder Dampferzeuger mehrfach mit Wasser zu füllen, insbesondere mit Wasser, das anschließend in den Zwischenbehälter geleitet wird. Diese mehrfachen Füllvorgänge des Heißwasser- und/oder Dampferzeugers bewirken vorteilhafterweise, dass dieser entkalkt wird bzw. es wird verstärktem Verkalken vorgebeugt.

Zweckmäßigerweise wird dem Wasser noch vor, bei oder nach einem oder mehreren der Füllvorgänge des Heißwasser- und/oder Dampferzeugers ein Reinigungsmittel und/oder ein Entkalkungsmittel hinzugesetzt. Mit anderen Worten wird der Heißwasser- und/oder Dampferzeuger mit Wasser gespült, dem ein Reinigungsmittel und/oder ein Entkalkungsmittel zugesetzt ist.

Weitere Merkmale der vorliegenden Erfindung ergeben sich aus den beigefügten Patentansprüchen, der nachfolgenden Beschreibung eines bevorzugten Ausführungsbeispiels sowie aus der beigefügten Zeichnung. Darin zeigt:

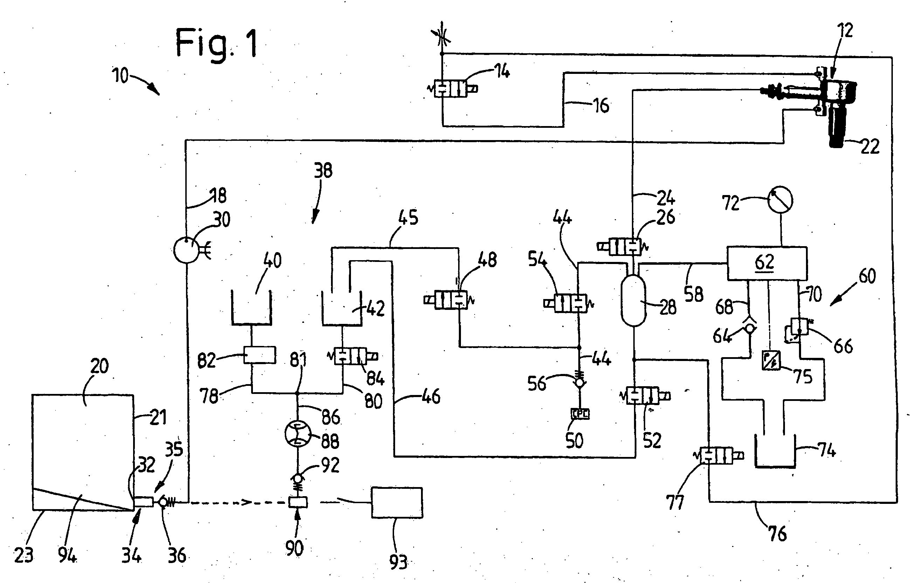

- Fig. 1: eine Prinzipdarstellung einer erfindungsgemäßen Kaffeemaschine, die mit dem erfindungsgemäßen Reinigungsverfahren betrieben wird.

Die Fig. 1 zeigt die Bauteile eines Milchmoduls 10 einer erfindungsgemäßen Kaffeemaschine, nämlich im vorliegenden Fall einen sogenannten Kaffeevollautomaten. Der Aufbau derartiger Kaffeevollautomaten ist grundsätzlich bekannt, sodass dieser vorliegend nicht dargestellt werden muss.

Mit dem Milchmodul 10 des erfindungsgemäßen Kaffeevollautomaten kann Milch einem von dem Automaten produzierten Kaffeegetränk zugeführt bzw. mit diesem vermischt werden. In der Regel wird die Milch von dem Milchmodul 10 zu diesem Zweck noch in besonderer Weise aufbereitet, beispielsweise erwärmt und/oder aufgeschäumt.

Das Milchmodul 10 verfügt zu diesem Zweck über eine Aufschäumeinrichtung 12, mit der in an sich bekannter Weise Milch erhitzt und/oder aufgeschäumt werden kann. Die Milch wird der Aufschäumeinrichtung 12 zugeführt, indem sie mittels einer Milchpumpe 30 aus einem Milchvorratsbehälter 20 entlang einer Milchleitung 18 bis zu der Aufschäumeinrichtung 12 gepumpt wird. Anschließend kann sie - aufbereitet oder unaufbereitet - über die Ausgabe 22 der Aufschäumeinrichtung 12 ausgegeben werden.

Um aufgeschäumte Milch auszugeben, wird der Aufschäumeinrichtung 12 über eine Leitung 16 - nach Öffnung eines in der Leitung 16 angeordneten Absperrventils 14 - bedarfsweise Luft zugeführt. Die Aufschäumeinrichtung ist zu diesem Zweck in bekannter Weise unter Ausnutzung des Venturi-Prinzips selbstansaugend ausgebildet. Alternativ könnte die Luft auch mittels einer Druckluftquelle zugeführt werden.

Mit Hilfe der Luft kann die über die Milchleitung 18 zugeführte Milch in der Aufschäumeinrichtung 12 in bekannter Weise aufgeschäumt und über eine Ausgabe 22 der Aufschäumeinrichtung 12 in ein unter der Ausgabe 22 angeordnetes Gefäß ausgegeben werden, beispielsweise in eine Tasse (nicht dargestellt).

Um den Milchschaum bzw. die Milch zu erwärmen, ist die Aufschäumeinrichtung 12 zudem über eine Leitung 24 sowie ein geeignetes Absperrventil 26 an einen Heißwasser-und/oder Dampferzeuger 28 angeschlossen. Der Heißwasser- und/oder Dampferzeuger 28 führt der Aufschäumeinrichtung 12 in ebenfalls bekannter Weise heißen Wasserdampf zu, um den Milchschaum bzw die Milch zu erwärmen.

Zum gleichzeitigen Aufschäumen und Erwärmen der über die Milchleitung 18 zugeführten Milch wird der Aufschäumeinrichtung 12 demnach gleichzeitig über die Leitung 24 heißer Wasserdampf zugeführt sowie über die Leitung 16 Luft.

Soll dagegen unaufgeschäumte heiße Milch ausgegeben werden, wird (über die Leitung 24) lediglich der heiße Wasserdampf zugeführt. Dieser erwärmt die zugeführte Milch.

Soll schließlich ausschließlich kalte bzw. nicht erwärmte, unaufgeschäumte Milch ausgegeben werden, genügt es, die zugeführte Milch ohne weitere Aufbereitung aus der Ausgabe 22 zu leiten.

Was den Heißwasser- und/oder Dampferzeuger 28 betrifft, so handelt es sich vorliegend um eine bei Kaffeevollautomaten bekannte Einheit, etwa einen Boiler oder dergleichen. Es kann naturgemäß auch ein Durchlauferhitzer eingesetzt werden.

Der Milchvorratsbehälter 20 weist einen von geeigneten Seitenwandungen 21 eingefassten, nach oben offenen Innenraum auf, in dem die der Aufschäumeinrichtung 12 zuzuführende Milch gespeichert ist. In der Nähe des Bodens 23 des Milchbehälters 20 ist in einer der Seitenwandungen 21 eine Auslassöffnung 32 angeordnet. An der Auslassöffnung 32 ist ein Schnellkupplungsteil einer Schnellkupplung 34 befestigt. An dem freien Ende der Milchleitung 18, nämlich bezogen auf die Strömungsrichtung der anzusaugenden Milch stromauf eines Rückschlagventils 36, ist wiederum ein entsprechender Milchbehälteranschluss 35 befestigt. Der Milchbehälteranschluss 35 verfügt dabei über ein geeignetes, ebenfalls als Schnellkupplungsteil ausgebildetes Gegenstück zu dem Schnellkupplungsteil des Milchbehälters 20.

Zur Verbindung des Milchvorratsbehälters 20 mit der Milchleitung 18 bzw. mit dem Milchbehälteranschluss 35 werden die beiden Schnellkupplungsteile der Schnellkupplung 34 in geeigneter Weise zusammengesteckt bzw. miteinander verbunden. In der Fig. 1 ist der zusammengefügte Zustand der Schnellkupplung 34 gezeigt.

Das Rückschlagventil 36 sorgt schließlich insbesondere dafür (im Sinne eines Tropfschutzes), dass nach dem Trennen des Milchvorratsbehälters 20 von der Milchleitung 18 bzw. von dem Milchbehälteranschluss 35 (durch Lösen der beiden Schnellkupplungsteile der Schnellkupplung 34) noch in der Milchleitung 18 befindliche Restmilch nicht aus deren offenem Milchleitungsende bzw. dem entsprechenden offenen Schnellkupplungsteil ausströmen kann.

Besonders wesentlich ist eine Reinigungseinrichtung 38, mit der die milchführenden Bauteile des Milchmoduls 10, insbesondere der Milchanschluss 35, das Rückschlagventil 36, die Milchleitung 18, die Milchpumpe 30 und die Aufschäumeinrichtung 12, gereinigt werden können. Die Reinigungseinrichtung 38 ist vorliegend Teil einer übergeordneten Reinigungseinrichtung des Kaffeeautomaten, mit der die gesamten reinigungsbedürftigen Bauteile des Automaten gereinigt werden können.

Die Reinigungseinrichtung 38 umfasst dabei ein Reinigungsmittelreservoir 40, nämlich einen Reinigungsbehälter. In dem Reinigungsbehälter ist ein geeigneter, im vorliegenden Fall flüssiger, chemischer Milchreiniger gespeichert.

Die Reinigungseinrichtung 38 umfasst des Weiteren einen Zwischenbehälter 42, der über Leitungen 44, 45 sowie alternativ über eine Leitung 46 mit Wasser befüllt werden kann.

Über die Leitungen 44, 45 kann bei entsprechend geöffnetem Ventil 48 zum einen kaltes bzw. nicht erwärmtes Wasser aus einer zentralen Wasserquelle in den Zwischenbehälter 42 geleitet werden. Mit der Bezugsziffer 50 ist dabei ein geeignetes Anschlussstück bezeichnet, das an eine nicht gezeigte, zentrale Wasserquelle, etwa einen gewöhnlichen Wasseranschluss, angeschlossen werden kann.

Die Leitung 46 dagegen endet unter Zwischenschaltung eines Absperrventils 52 an ihrem dem Zwischenbehälter 42 abgewandten Ende an dem Heißwasser- und/oder Dampferzeuger 28. Entsprechend kann der Zwischenbehälter 42 über die Leitung 46 bei geöffnetem Ventil 52 mit von dem Heißwasser- und/oder Dampferzeuger 28 stammenden Heißwasser befüllt werden.

Der Heißwasser- und/oder Dampferzeuger 28 selbst kann bei geöffneten, in der Leitung 44 angeordneten Absperrventil 54 von der zentralen Wasserversorgung 50 mit Wasser versorgt werden. Ein geeignetes Rückschlagventil 56 sorgt dafür, dass ein ungewollter Rückfluss zu der Wasserversorgung ausgeschlossen ist.

Der Heißwasser- und/oder Dampferzeuger 28 ist des Weiteren über eine Leitung 58 in an sich bekannter Weise mit einer Einrichtung 60 verbunden, die über einen Verteiler 62 den Heißwasser- und/oder Dampferzeuger 28 mit einem Antivakuumventil 64 verbindet sowie mit einem Überdruckventil 66. Letztere sind dabei in von dem Verteiler 62 abgehenden Leitungen 68, 70 positioniert. Weiter ist in der Einrichtung 60 noch ein Manometer 72 zur Drucküberwachung angeordnet sowie ein Abwasserbehälter 74, der unterhalb der Leitungen 68, 70 positioniert ist. Schließlich verfügt die Einrichtung 60 über einen Druckschalter 75, mithilfe dessen der Dampfdruck in dem Heißwasser- und/oder Dampferzeuger 28 reguliert wird. In bekannter Weise sorgt die Einrichtung 60 dafür, dass ein zu großer Über-oder zu großer Unterdruck in dem Heißwasser- und/oder Dampferzeuger 28 vermieden wird.

Über eine Zweigleitung 76, die von der Leitung 46 abgeht, ist der Dampferzeuger 28 des Weiteren an die Luftleitung 16 angeschlossen. Innerhalb der Leitung 76 ist zudem ein Absperrventil 77 angeordnet. Der Anschluss an die Luftleitung 16 hat den Sinn, auch die Luftleitung 16 bei Bedarf mit aus dem Heißwasser- und/oder Dampferzeuger 28 stammenden heißem Dampf oder heißem Wasser zu spülen, um dadurch Milch oder Milchreste, die möglicherweise ungewollt über die Aufschäumeinrichtung 12 in die Luftleitung 16 eingedrungen sind, insbesondere in den an die Milchaufschäumeinrichtung 12 angrenzenden Abschnitt der Milchleitung 16, entfernen zu können.

Der Reinigungsmittelbehälter 40 und der Zwischenbehälter 42 sind jeweils über abgehende, an entsprechende Behälterauslässe im jeweiligen Boden bzw. Wandungsbereich angeschlossene Leitungen 78, 80 mit einer gemeinsamen Leitung 86 flüssigkeitsleitend verbunden, in die die Leitungen 78, 80 stromab jeweils münden bzw. mit der die Leitungen 78, 80 über ein T-Stück 81 verbunden sind.

In den Leitungen 78, 80 sind ebenfalls Absperrventile 82, 84 angeordnet.

Die gemeinsame Leitung 86 verläuft unter Zwischenschaltung eines Durchflussmessers 88 bis zu einem Reinigungsanschluss 90, der ein zu der Schnellkupplung 34 passendes Schnellkupplungsteil aufweist. Das Schnellkupplungsteil des Reinigungsanschlusses 90 entspricht dem Schnellkupplungsteil des Milchbehälters 20. Es ist demnach derart ausgebildet, dass es mit dem entsprechenden Schnellkupplungsteil des Milchbehälteranschlusses 35 der Milchleitung 18 verbunden werden kann. Bezogen auf die Ausflussrichtung des Milchreinigers bzw. des Wassers aus dem Behälter 40 bzw. aus dem Behälter 42 ist stromauf des Schnellkupplungsteils in die Leitung 86 noch ein Rückschlagventil 92 integriert, mit dem Flüssigkeitsströme in Richtung der Behälter 40, 42 verhindert werden.

Die Reinigung des Milchmoduls 10 erfolgt vorliegend im Rahmen eines übergeordneten Reinigungsprogramms bzw. Reinigungsverfahrens, die auch die an sich bekannte Reinigung der übrigen reinigungsbedürftigen, insbesondere der kaffeegetränkführenden Bauteile des Automaten mit einschließt. Es kann aber auch vorgesehen sein, ausschließlich das Milchmodul 10 zu reinigen. Das Reinigungsverfahren läuft folgendermaßen ab:

Gemäß einer bevorzugten Ausführungsform der Erfindung ist vorgesehen, dass der Kaffeevollautomat selbstständig mittels geeigneter Sensorik erkennt, dass eine Reinigung des Automaten durchgeführt werden muss. Alternativ oder zusätzlich kann grundsätzlich auch vorgesehen sein, dass die Reinigung des gesamten Kaffeevollautomaten bzw. gegebenenfalls ausschließlich des Milchmoduls 10 initiiert wird, indem ein Bediener zunächst über ein geeignetes Aus- und/oder Eingabemittel die Reinigungsfunktion bzw. ein entsprechendes Reinigungsprogramm aktiv auswählt, sobald er die Reinigung wünscht.

Nachdem gemäß der bevorzugten Ausführungsform der Kaffeevollautomat erkannt hat, dass eine Reinigung des Automaten notwendig ist, wird dies auf dem Ein- und/oder Ausgabemittel des Automaten, etwa einem Bildschirm, insbesondere einem Touchscreen des Automaten, angezeigt. Insofern der Automat - wie dies vorliegend der Fall ist - über ein Milchmodul 10 verfügt, erkennt dies der Automat bzw. die Steuerung desselben.

Im Anschluss wird der Bediener aufgefordert, mindestens ein oder mehrere Maßnahmen durchzuführen. Diese Maßnahmen werden ihm mindestens teilweise bevorzugt bildschirmgesteuert angezeigt:

Wenn der Bediener im Rahmen der Reinigung des Kaffeevollautomaten auch die Reinigung des Milchmoduls 10 wünscht, muss der Bediener den Milchbehälter 20 von dem Milchbehälteranschluss 35 der Milchleitung 18 trennen. Hierzu trennt er die entsprechenden Schnellkupplungsteile der Schnellkupplung 34 voneinander. Anschließend wird das Schnellkupplungsteil des Milchbehälteranschlusses 35 der Milchleitung 18 mit dem entsprechenden Gegenstück verbunden, d. h. dem entsprechenden Schnellkupplungsteil des Reinigungsanschlusses 90.

Mithin ist im Ergebnis die Milchleitung 18 mit dem Reinigungsanschluss 90 verbunden. Durch das Zusammenstecken bzw. das Verbinden der Schnellkupplungsteile wird automatisch ein geeigneter Kupplungsschalter 93 betätigt bzw. geschaltet. Hierdurch erkennt die Steuerung des Kaffeevollautomaten bzw. die Steuerung der Reinigungseinrichtung 38 desselben, dass die Milchleitung 18 mit dem Reinigungsanschluss 90 verbunden ist.

Des Weiteren muss der Bediener einen nicht dargestellten Abwasserbehälter unter die Ausgabeeinrichtung des Kaffeeautomaten stellen, insbesondere unter die Ausgabe 22 der Aufschäumeinrichtung 12 stellen. Vorteilhafterweise wird dazu ein Abwasserbehälter mit einem Format eingesetzt, das ausreichend ist, um unterhalb der gesamten Ausgabeeinrichtung des Kaffeevollautomaten inklusive Kaffeegetränkeauslass positioniert zu werden.

Mittels eines geeigneten Sensors, nämlich geeigneter Reed-Kontaktschalter, erkennt die Steuerung des Kaffeevollautomaten, dass der Abwasserbehälter entsprechend unterhalb der Ausgabe 22 positioniert wurde.

Nach Erkennen des Abwasserbehälters wird dem Bediener auf einem Bildschirm automatisch angezeigt, dass die Reinigung des Automaten - und im vorliegenden Fall auch des Milchmoduls 10 des Automaten - beginnt, insofern er ein bestimmtes Eingabeelement betätigt, etwa ein bestimmtes Feld auf einem Touchscreen. Nach Betätigung des Eingabeelements läuft die weitere Reinigung des Automaten und insbesondere Milchmoduls 10 vollautomatisch ab.

Nachfolgend wird nur auf die Reinigung des Milchmoduls 10 eingegangen, da die Reinigungsvorgänge für die anderen reinigungsbedürftigen Bauteile von Kaffeevollautomaten bekannt sind:

Zunächst wird erfindungsgemäß der Heißwasser- und/oder Dampferzeuger 28 vorgespült, indem bei geöffnetem Ventil 54 über die Leitung 44 Kaltwasser über den zentralen Wasseranschluss 50 in diesen eingefüllt wird. Kurz vorher, parallel hierzu oder im Anschluss daran öffnet das in der Leitung 45 angeordnete Ventil 48, sodass auch der Zwischenbehälter 42 mit kaltem Wasser gefüllt wird.

Das kalte Wasser aus dem Zwischenbehälter 42 wird im Anschluss daran in einem ersten Reinigungsvorgang bei geöffnetem Ventil 84 durch die spätestens zu diesem Zeitpunkt anlaufende Milchpumpe 30 durch die milchführenden Bauteile 35, 36, 18, 30 und 12 gespült und strömt aus der Ausgabe 22 in den nicht dargestellten Abwasserbehälter. Dieses Vorspülen der Bauteile 35, 36, 18, 30, 12 mit kaltem Wasser dient dazu, die ersten groben Milchreste aus den milchführenden Bauteilen 35, 36, 18, 30, 12 zu entfernen.

In dem Heißwasser- und/oder Dampferzeuger 28 ist zu Beginn des Reinigungsbetriebs, also bei dem oben beschriebenen Befüllen desselben mit dem Kaltwasser, bereits eine gewisse Menge an heißem Wasser bzw. heißem Wasserdampf enthalten. Dieses heiße Wasser bzw. der Wasserdampf stammt noch aus dem vorherigen Standardbetrieb des Kaffeevollautomaten, in dem in dem Heißwasser- und/oder Dampferzeuger 28 Wasser bzw. Wasserdampf vorgehalten wird mit in der Regel einer Temperatur von ca. 120°C bei einem Druck von ca. 1,4 bar. Das in den Heißwasser- und/oder Dampferzeuger 28 zusätzlich eingebrachte Kaltwasser sorgt nun dafür, das Wasser bzw. den Wasserdampf auf eine Temperatur abzukühlen, die sicherstellt, dass das Wasser in flüssiger Form aus dem Heißwasser- und/oder Dampferzeuger 28 ausgeleitet werden kann. Vorzugsweise wird hierzu die Kaltwasserzufuhr derart gesteuert, dass das entsprechende Mischwasser eine Temperatur von höchstens 100 °C, aber mindestens 70 °C aufweist.

Anschließend wird das heiße Wasser bei geöffnetem Ventil 52 über die Leitung 46 in den im Verlaufe des oben beschriebenen ersten Reinigungsvorgangs mittlerweile geleerten Behälter 42 gefüllt.

In einem nachfolgenden zweiten Reinigungsvorgang ist nun vorgesehen, die milchführenden Bauteile 35, 36, 18, 30, 12 mit dem in dem Behälter 40 als Konzentrat vorhandenen Milchreiniger zu spülen. Hierzu werden beide Absperrventile 82 und 84 geöffnet, sodass an dem Verbindungspunkt der Leitungen 78, 80 (T-Stück 81) das Milchreinigerkonzentrat mit dem aus dem Zwischenbehälter 42 fließenden heißen Wasser vermischt wird. Dies geschieht naturgemäß wiederum bei laufender Milchpumpe 30, die die jeweiligen Flüssigkeiten aus den Behältern 40, 42 ansaugt bzw. pumpt.

Parallel oder zeitlich versetzt hierzu ist bereits der Heißwasser- und/oder Dampferzeuger 28 erneut mit kaltem Wasser befüllt worden, das dieser wiederum aufheizt. Dieses mehrfache Befüllen des Heißwasser- und/oder Dampferzeugers 28 mit Wasser (mit nachfolgendem Abführen des Wassers) reinigt denselben bzw. beugt einem Verkalken desselben vor.

Grundsätzlich kann dabei vorgesehen sein, dass dem Wasser in dem Heißwasser-und/oder Dampferzeuger 28 automatisch ein eigenes Reinigungsmittel aus einem geeigneten Reinigungsmittelreservoir, ggf. dem Reinigungsbehälter 40, zugegeben wird, um den Heißwasser- und/oder Dampferzeuger 28 besonders wirksam zu reinigen.

In einem nachfolgenden Reinigungsvorgang wird das heiße Wasser aus dem Heißwasser- und/oder Dampferzeuger 28, das gegebenenfalls versetzt ist mit dem vorgenannten Reinigungsmittel, in den Zwischenbehälter 42 geleitet. Bei geöffnetem Absperrventil 84 werden die milchführenden Bauteile 35, 36, 18, 30, 12 anschließend von dem heißen Wasser durchspült, das wiederum in den nicht dargestellten Abwasserbehälter fließt. Die Temperatur des Wassers ist dabei derart hoch, dass die milchführenden Bauteile 35, 36, 18, 30, 12 desinfiziert werden.

Zeitgleich hierzu oder zeitlich versetzt wird der Zwischenbehälter 42 erneut mit Wasser gefüllt, diesmal wiederum mit kaltem Wasser aus der zentralen Wasserversorgung. In einem weiteren Reinigungsvorgang werden dann die milchführenden Bauteile 35, 36, 18, 30, 12 von dem kalten Wasser des Zwischenbehälters 42 durchspült, das wiederum ebenfalls letztlich in den nicht dargestellten Abwasserbehälter fließt. Dieses Nachspülen der milchführenden Bauteile 35, 36, 18, 30, 12 mit kaltem Wasser dient dazu, diese Bauteile abzukühlen, sodass bei späterer Wiederaufnahme des Standardbetriebs des Kaffeevollautomaten verhindert wird, dass Milch an den durch das vorhergehende Spülen mit heißem Wasser erwärmten Bauteilen anbrennt bzw. sich an diesen festsetzt.

Wie der Fachmann des Standes der Technik erkennt, ist es ohne Weiteres möglich, jeweils einzelne der vorgenannten Reinigungsvorgänge mehrfach zu wiederholen, wegzulassen und/oder in unterschiedlicher Reihenfolge durchzuführen. Weiter ist es denkbar, anstelle des Milchreinigerkonzentrats bereits gebrauchsfertigen Milchreiniger zu verwenden, sodass eine Vermischung mit Wasser nicht notwendig ist.

Der Milchreiniger könnte in diesem Fall beispielsweise durch den Heißwasser- und/oder Dampferzeuger 28 geführt werden, sodass der Reiniger durch diesen erwärmt und anschließend in heißem Zustand durch die milchführenden Bauteile 35, 36, 18, 30, 12 geleitet wird.

Mittels des Durchflussmessers 88 kann die Steuerung des Kaffeevollautomaten die jeweiligen Füllstände der Behälter 40, 42 ermitteln und insbesondere feststellen, ob Milchreiniger in den Behälter 40 nachgefüllt werden muss.

Sobald sämtliche Reinigungszyklen abgeschlossen sind, wird der Benutzer des Kaffeevollautomaten von dem Bildschirmmenü des Kaffeevollautomaten aufgefordert, die Verbindung von Milchbehälteranschluss 35 und Reinigungsanschluss 90 wieder zu trennen und den Milchbehälter 20 erneut an den Milchansaugschlauch 18 anzuschließen. Des Weiteren wird er aufgefordert, den nicht dargestellten Abwasserbehälter unter der Ausgabe 22 zu entfernen. Anschließend kann der Kaffeevollautomat in seinen Standardbetrieb übergehen.

Eine weitere, nicht explizit dargestellte Besonderheit der Erfindung ist ein schräger Boden 94 in dem Milchbehälter 20, der unter anderem dafür sorgt, dass die Milch innerhalb des Behälters 20 optimal in Richtung des Milchanschlusses 34 geleitet wird. Dabei ist vorgesehen, dass der Füllstand des Milchbehälters 34 automatisch erfasst wird durch einen nicht dargestellten, geeigneten Sensor. Ein solcher Sensor ist bevorzugt eine Lichtschranke, deren Lichtstrahl bei gefülltem Behälter von der darin gespeicherten Milch absorbiert wird, bei geleertem Milchvorratsbehälter 20 aber von dem Schrägboden 94 des Milchbehälters 20 reflektiert wird. Zu diesem Zweck muss die Oberseite des Schrägbodens 94 bzw. der Schrägboden 94 aus geeignetem, einen Lichtstrahl reflektierenden Material gebildet sein, beispielsweise aus Metall.

### Bezugszeichenliste:

- 10: Milchmodul
- 12: Aufschäumeinrichtung
- 14: Ventil
- 16: Leitung
- 18: Milchleitung
- 20: Milchvorratsbehälter
- 21: Seitenwandung
- 22: Ausgabe
- 23: Boden
- 24: Leitung
- 26: Ventil
- 28: Heißwasser- und/oder Dampferzeuger
- 30: Milchpumpe
- 32: Öffnung
- 34: Schnellkupplung
- 35: Milchbehälteranschluss
- 36: Rückschlagventil
- 38: Reinigungseinrichtung
- 40: Reinigungsmittelbehälter
- 42: Zwischenbehälter
- 44: Leitung
- 45: Leitung
- 46: Leitung
- 48: Ventil
- 50: Anschlussstück
- 52: Ventil
- 54: Ventil
- 56: Ventil
- 58: Leitung
- 60: Einrichtung
- 62: Verteiler
- 64: Antivakuumventil
- 66: Überdruckventil
- 68: Leitung
- 70: Leitung
- 72: Manometer
- 74: Abwasserbehälter
- 76: Zweigleitung
- 77: Ventil
- 78: Leitung
- 80: Leitung
- 81: T-Stück
- 82: Ventil
- 84: Ventil
- 86: Leitung
- 88: Durchflussmesser
- 90: Reinigungsanschluss
- 92: Ventil
- 93: Kupplungsschalter
- 94: Schrägboden

## Patentansprüche

1. Kaffeemaschine, insbesondere Kaffeevollautomat, mit einem Milchmodul (10), mit dem aufgeschäumte Milch erzeugbar ist, und mit einer Reinigungseinrichtung (38), mit der ein oder mehrere, bevorzugt sämtliche milchführenden Bauteile (35, 36, 18, 30, 12) des Milchmoduls (10) reinigbar sind, wobei die Kaffeemaschine ausgebildet ist, während des Reinigungsbetriebs der Reinigungseinrichtung (38) durch das mindestens eine milchführende Bauteil (35, 36, 18, 30, 12) ein Reinigungsmittel, nämlich einen Milchreiniger, zu leiten, wobei die Kaffeemaschine, nämlich die Reinigungseinrichtung (38) der Kaffeemaschine, über ein eigenes Reinigungsmittelreservoir (40) verfügt, aus dem das Reinigungsmittel während des Reinigungsbetriebs automatisch entnehmbar ist, wobei das mindestens eine milchführende Bauteil, durch das das Reinigungsmittel während des Reinigungsbetriebs geleitet wird, eine Milchleitung (18) ist, die von einem Vorratsbehälter, in dem von dem Milchmodul anzusaugende Milch gelagert ist, zu einer Aufschäumeinrichtung des Milchmoduls führbar ist, und wobei die Kaffeemaschine über einen Heißwasser- und/oder Dampferzeuger (28) verfügt, **dadurch gekennzeichnet, dass** der Heißwasser- und/oder Dampferzeuger (28) im Reinigungsbetrieb der Reinigungseinrichtung (38) unmittelbar oder mittelbar mit der Milchleitung flüssigkeitsleitend verbunden ist, sodass die Kaffeemaschine ausgebildet ist, aus dem Heißwasser- und/oder Dampferzeuger (28) stammendes, heißes Wasser während des Reinigungsbetriebs durch die Milchleitung zu leiten, und dass stromab des Reinigungsmittelreservoirs (40) eine Reinigungsmittelleitung (78) und stromab des Heißwasser- und/oder Dampferzeugers (28) eine Wasserleitung (80) angeordnet ist, durch die das Reinigungsmittel bzw. das heiße Wasser jeweils fließen können, und die jeweils unmittelbar oder mittelbar mit einer gemeinsamen Leitung (86) flüssigkeitsleitend verbunden sind, durch die während des Reinigungsbetriebs wahlweise das Reinigungsmittel, oder aus dem Heißwasser- und/oder Dampferzeuger (28) stammendes, heißes Wasser, oder ein Gemisch aus dem Reinigungsmittel und dem heißen Wasser in Richtung der Milchleitung geleitet werden kann.

2. Kaffeemaschine gemäß Anspruch 1, **dadurch gekennzeichnet, dass** das Reinigungsmittelreservoir (40) ein auch außerhalb des Reinigungsbetriebs der Reinigungseinrichtung (38) mit der Kaffeemaschine verbundenes, insbesondere im Inneren des Gehäuses der Kaffeemaschine angeordnetes Bauteil der Kaffeemaschine ist, bevorzugt ein Vorratsbehälter, in dem flüssiges Reinigungsmittel speicherbar ist.

3. Kaffeemaschine gemäß einem oder mehreren der vorhergehenden Ansprüche, **dadurch gekennzeichnet, dass** die Kaffeemaschine Mittel aufweist, mit denen erkennbar ist, ob unterhalb einer Ausgabeeinrichtung (22) der Kaffeemaschine, insbesondere einer Ausgabeeinrichtung für - insbesondere aufgeschäumte - Milch, ein Abwasserbehälter positioniert ist, insbesondere Mittel, die mindestens einen Sensor umfassen, insbesondere einen mit einem in geeigneter Weise ausgebildeten Abwasserbehälter zusammenwirkenden Reed-Kontaktschalter.

4. Kaffeemaschine gemäß einem oder mehreren der vorhergehenden Ansprüche, dass die Kaffeemaschine, nämlich das Milchmodul (10) derselben, über einen unmittelbar oder mittelbar mit einer Aufschäumeinrichtung (12) zum Aufschäumen der Milch flüssigkeitsleitend verbundenen Milchbehälteranschluss (35) verfügt, insbesondere ein geeignetes Schnellkupplungsteil, an dem ein mit einem entsprechenden Gegenstück ausgerüsteter Milchvorratsbehälter (20) lösbar befestigbar ist.

5. Kaffeemaschine gemäß Anspruch 4, **dadurch gekennzeichnet, dass** der Milchbehälteranschluss (35) mit einem Reinigungsanschluss (90) der Reinigungseinrichtung (38) lösbar flüssigkeitsleitend verbindbar ist, dem im Reinigungsbetrieb das insbesondere aus dem Reinigungsbehälter (40) stammende Reinigungsmittel und/oder insbesondere aus dem Heißwasser- und/oder Dampferzeuger (28) und/oder dem Zwischenbehälter (42) stammendes Wasser zuleitbar ist.

6. Kaffeemaschine gemäß Anspruch 5, **dadurch gekennzeichnet, dass** das Schnellkupplungsteil des Milchbehälteranschlusses (35) zur lösbaren, flüssigkeitsleitenden Verbindung mit dem Reinigungsanschluss (90) mit einem entsprechenden, mit diesem zusammenwirkenden Schnellkupplungsteil des Reinigungsanschlusses (90) flüssigkeitsleitend verbunden wird bzw. verbindbar ist.

7. Kaffeemaschine gemäß einem oder mehreren der vorhergehenden Ansprüche, **dadurch gekennzeichnet, dass** stromab des Reinigungsmittelbehälters (40) und/oder stromab des Zwischenbehälters (42) ein Durchflussmesser (88) angeordnet ist, mit dem im Reinigungsbetrieb der Durchfluss des Reinigungsmittels und/oder des aus dem Zwischenbehälter (42) stammenden Wassers messbar ist.

8. Verfahren zur Reinigung eines Kaffeevollautomaten, bei dem ein oder mehrere, bevorzugt sämtliche milchführenden Bauteile (35, 36, 18, 30, 12) eines Milchmoduls (10) des Kaffeevollautomaten gereinigt werden, indem während des Reinigungsbetriebs der Reinigungseinrichtung (38) durch das mindestens eine milchführende Bauteil (35, 36, 18, 30, 12) ein Reinigungsmittel, nämlich ein Milchreiniger, geleitet wird, wobei das Reinigungsmittel automatisch einem eigenen Reinigungsmittelreservoir (40) des Kaffeevollautomaten entnommen wird, **dadurch gekennzeichnet, dass** im Reinigungsbetrieb mindestens zwei separate Reinigungsvorgänge erfolgen, wobei in einem ersten Reinigungsvorgang das Reinigungsmittel, insbesondere vermischt mit vorzugsweise heißem Wasser, mindestens durch eine Milchleitung geleitet wird, die von einem Vorratsbehälter, in dem von dem Milchmodul anzusaugende Milch gelagert ist, zu einer Aufschäumeinrichtung des Milchmoduls führt, und wobei in einem weiteren, dem ersten Reinigungsvorgang zeitlich nachfolgenden Reinigungsvorgang heißes Wasser, insbesondere nicht mit Reinigungsmittel vermischtes heißes Wasser, durch die Milchleitung geleitet wird, das zuvor in einem Heißwasser- und Dampferzeuger (28) des Kaffeevollautomaten auf eine Temperatur erwärmt wird, die die thermische Desinfektion des milchführenden Bauteils (35, 36, 18, 30, 12) durch das heiße Wasser ermöglicht, dass das Wasser, das durch das milchführende Bauteil (35, 36, 18, 30, 12) geleitet wird, aus einem Zwischenbehälter (42) stammt, der zuvor befüllt worden ist mit aus dem Heißwasser- und Dampferzeuger (28) des Kaffeevollautomaten stammendem heißem Wasser, wobei im Rahmen des Reinigungsbetriebs der Heißwasser- und Dampferzeuger (28) mehrfach mit Wasser gefüllt wird, das anschließend in den Zwischenbehälter (42) geleitet wird.

9. Verfahren gemäß Anspruch 8, **dadurch gekennzeichnet, dass** in einem weiteren, vorzugsweise den beiden vorgenannten Reinigungsvorgängen zeitlich vorhergehenden Reinigungsvorgang kaltes Wasser durch das milchführende Bauteil (35, 36, 18, 30, 12) geleitet wird.

10. Verfahren gemäß Anspruch 9, **dadurch gekennzeichnet, dass** vor, bei oder nach einem oder mehreren der Füllvorgänge des Heißwasser- und Dampferzeugers (28) dem Wasser ein Reinigungsmittel hinzugesetzt wird, sodass der Heißwasser- und Dampferzeuger (28) mit mit Reinigungsmittel versetztem Wasser befüllt ist oder wird.

11. Verfahren gemäß einem oder mehreren der vorhergehenden Ansprüche 8 10, **dadurch gekennzeichnet, dass** der Reinigungsbetrieb des Kaffeevollaütomaten, insbesondere nach händischer Betätigung eines geeigneten Bedienelements des Kaffeevollautomaten durch einen Bediener, auslösbar ist, insofern mindestens die beiden folgenden Bedingungen kumulativ erfüllt sind:
a) unter einer Ausgabeeinrichtung (22) des Kaffeevollautomaten ist ein geeigneter Abwasserbehälter angeordnet, und
b) zwischen einem Reinigungsanschluss (90) des Kaffeevollautomaten einerseits, dem im Reinigungsbetrieb insbesondere aus einem Reinigungsmittelvorratsbehälter (40) stammendes Reinigungsmittel, insbesondere vermischt mit Wasser, oder Wasser zugeleitet wird, insbesondere aus dem Heißwasser- und Dampferzeuger (28) stammendes Wasser, und einem Milchvorratsbehälteranschluss (35) des Kaffeevollautomaten andererseits muss eine flüssigkeitsleitende Verbindung hergestellt sein.

12. Verfahren gemäß Anspruch 11, **dadurch gekennzeichnet, dass** jeweils mittels eines geeigneten Sensors automatisch erfasst wird, ob der Abwasserbehälter unter der Ausgabeeinrichtung (22) angeordnet ist oder ob die flüssigkeitsleitende Verbindung zwischen dem Reinigungsanschluss (90) und dem Milchvorratsbehälteranschluss (35) hergestellt ist.

## Claims

1. Coffee machine, in particular fully automatic coffee machine, having a milk module (10) with which frothed milk can be generated, and having a cleaning device (38) with which one or more, preferably all, milk-carrying components (35, 36, 18, 30, 12) of the milk module (10) can be cleaned, wherein the coffee machine is designed to conduct a detergent, specifically a milk cleaner, through the at least one milk-carrying component (35, 36, 18, 30, 12) during the cleaning operation of the cleaning device (38), wherein the coffee machine, specifically the cleaning device (38) of the coffee machine, has a dedicated detergent reservoir (40) from which the detergent can be automatically drawn during the cleaning operation, wherein the at least one milk-carrying component through which the detergent is conducted during the cleaning operation is a milk line (18) which can be routed from a storage container, in which milk which is to be drawn from the milk module is stored, to a frothing device of the milk module, and wherein the coffee machine has a hot-water and/or steam generator (28), **characterized in that** the hot-water and/or steam generator (28) is directly or indirectly connected in a liquid-conducting manner to the milk line during the cleaning operation of the cleaning device (38), so that the coffee machine is designed to conduct hot water, which originates from the hot-water and/or steam generator (28), through the milk line during the cleaning operation, and **in that** a detergent line (78) is arranged downstream of the detergent reservoir (40) and a water line (80) is arranged downstream of the hot-water and/or steam generator (28), it being possible for the detergent and, respectively, the hot water to flow through the said detergent line and water line, and the said detergent line and water line each being directly or indirectly connected in a liquid-conducting manner to a common line (86) through which selectively the detergent, or hot water which originates from the hot-water and/or steam generator (28), or a mixture comprising the detergent and the hot water, can be conducted in the direction of the milk line during the cleaning operation.

2. Coffee machine according to Claim 1, **characterized in that** the detergent reservoir (40) is a component of the coffee machine which is also connected to the coffee machine outside the cleaning operation of the cleaning device (38) and in particular is arranged in the interior of the housing of the coffee machine, preferably a storage container in which liquid detergent can be stored.

3. Coffee machine according to one or both of the preceding claims, **characterized in that** the coffee machine has means with which it is possible to identify whether a wastewater container is positioned beneath a dispensing device (22) of the coffee machine, in particular a dispensing device for - in particular frothed - milk, in particular means which comprise at least one sensor, in particular a reed contact switch which interacts with a wastewater container which is designed in a suitable manner.

4. Coffee machine according to one or more of the preceding claims, that the coffee machine, specifically the milk module (10) of the said coffee machine, has a milk container connection (35) which is directly or indirectly connected in a liquid-conducting manner to a frothing device (12) for frothing the milk, in particular a suitable quick-action coupling part to which a milk storage container (20) which is equipped with a corresponding mating piece can be fastened in a detachable manner.

5. Coffee machine according to Claim 4, **characterized in that** the milk container connection (35) can be connected in a detachable and liquid-conducting manner to a cleaning connection (90) of the cleaning device (38), it being possible for the detergent which originates in particular from the cleaning container (40) and/or water which originates in particular from the hot-water and/or steam generator (28) and/or the intermediate container (42) to be fed to the said cleaning connection during the cleaning operation.

6. Coffee machine according to Claim 5, **characterized in that** the quick-action coupling part of the milk container connection (35) is connected or can be connected in a liquid-conducting manner to a corresponding quick-action coupling part of the cleaning connection (90), which quick-action coupling part interacts with the said quick-action coupling part of the milk container connection, for connection in a detachable and liquid-conducting manner to the cleaning connection (90).

7. Coffee machine according to one or more of the preceding claims, **characterized in that** a flowmeter (88) is arranged downstream of the detergent container (40) and/or downstream of the intermediate container (42), it being possible for the throughflow rate of the detergent and/or of the water which originates from the intermediate container (42) during the cleaning operation to be measured using the said flowmeter.

8. Method for cleaning a fully automatic coffee machine, in which method one or more, preferably all, milk-carrying components (35, 36, 18, 30, 12) of a milk module (10) of the fully automatic coffee machine are cleaned by a detergent, specifically a milk cleaner, being conducted through the at least one milk-carrying component (35, 36, 18, 30, 12) during the cleaning operation of the cleaning device (38), wherein the detergent is automatically drawn from a dedicated detergent reservoir (40) of the fully automatic coffee machine, **characterized in that** at least two separate cleaning processes take place during the cleaning operation, wherein, in a first cleaning process, the detergent, in particular mixed with preferably hot water, is conducted at least through a milk line which leads from a storage container, in which milk which is to be drawn from the milk module is stored, to a frothing device of the milk module, and wherein, in a further cleaning process which follows the first cleaning process, hot water, in particular hot water which is not mixed with detergent, is conducted through the milk line, the said hot water having been previously heated in a hot-water and steam generator (28) of the fully automatic coffee machine to a temperature which allows thermal disinfection of the milk-carrying component (35, 36, 18, 30, 12) by the hot water, **in that** the water which is conducted through the milk-carrying component (35, 36, 18, 30, 12) originates from an intermediate container (42) which had previously been filled with hot water which originates from the hot-water and steam generator (28) of the fully automatic coffee machine, wherein, as part of the cleaning operation, the hot-water and steam generator (28) is filled several times with water which is then conducted into the intermediate container (42).

9. Method according to Claim 8, **characterized in that**, in a further cleaning process which preferably precedes the two abovementioned cleaning processes, cold water is conducted through the milk-carrying component (35, 36, 18, 30, 12).

10. Method according to Claim 9, **characterized in that** a detergent is added to the water before, during or after one or more of the filling processes of the hot-water and steam generator (28), so that the hot-water and steam generator (28) is or will be filled with water to which detergent is admixed.

11. Method according to one or more of the preceding Claims 8-10, **characterized in that** the cleaning operation of the fully automatic coffee machine, in particular after manual operation of a suitable operator control element of the fully automatic coffee machine by an operator, can be triggered provided that at least the two following conditions are cumulatively met:
a) a suitable wastewater container is arranged below a dispensing device (22) of the fully automatic coffee machine, and
b) a liquid-conducting connection has to be established between a cleaning connection (90) of the fully automatic coffee machine on the one hand, detergent which originates in particular from a detergent storage container (40), in particular mixed with water, or water being fed to the said cleaning connection during the cleaning operation, in particular water which originates from the hot-water and steam generator (28), and a milk storage container connection (35) of the fully automatic coffee machine on the other hand.

12. Method according to Claim 11, **characterized in that** a suitable sensor in each case automatically detects whether the wastewater container is arranged below the dispensing device (22) or whether the liquid-conducting connection between the cleaning connection (90) and the milk storage container connection (35) is established.

## Revendications

1. Machine à café, notamment machine à café entièrement automatisée, avec un module pour le lait (10) à l'aide duquel du lait monté en mousse peut être réalisé et avec un dispositif de nettoyage (38) à l'aide duquel un ou plusieurs, de façon préférée l'ensemble des composants de guidage du lait (35, 36, 18, 30, 12) du module pour le lait (10), peuvent être nettoyés, la machine à café étant réalisée pour guider, pendant le mode de nettoyage du dispositif de nettoyage (38) à travers l'au moins un composant de guidage du lait (35, 36, 18, 30, 12), un moyen de nettoyage, notamment un produit de nettoyage de lait, la machine à café, notamment le dispositif de nettoyage (38) de la machine à café, disposant d'un réservoir de moyen de nettoyage (40) propre hors duquel le moyen de nettoyage peut être sorti automatiquement pendant le mode de nettoyage, l'au moins un composant de guidage du lait à travers lequel le moyen de nettoyage est guidé pendant le mode de nettoyage étant un conduit de lait (18) pouvant être amené d'un bac de réserve dans lequel est disposé le lait à aspirer par le module pour le lait jusqu'à un dispositif de moussage du module pour le lait et la machine à café disposant d'un élément de production d'eau chaude et/ou de vapeur (28), **caractérisée en ce que** l'élément de production d'eau chaude et/ou de vapeur (28) est relié de façon à conduire les fluides directement ou indirectement au conduit de lait en mode de nettoyage du dispositif de nettoyage (38), de sorte que la machine à café est réalisée pour conduire de l'eau chaude provenant de l'élément de production d'eau chaude et/ou de vapeur (28) à travers le conduit de lait pendant le mode de nettoyage, et qu'un conduit de moyen de nettoyage (78) est disposé en aval du réservoir de moyen de nettoyage (40) et qu'un conduit d'eau (80) est disposé en aval de l'élément de production d'eau chaude et/ou de vapeur (28), le moyen de nettoyage et/ou l'eau chaude pouvant respectivement s'écouler à travers lesdits conduits respectivement reliés de façon à conduire les fluides de façon directe ou de façon indirecte à un conduit commun (86) à travers lequel pendant le mode de nettoyage, le moyen de nettoyage ou l'eau chaude provenant de l'élément de production d'eau chaude et/ou de vapeur (28) ou un mélange de moyen de nettoyage et d'eau chaude peuvent être conduits au choix en direction du conduit de lait.

2. Machine à café selon la revendication 1, **caractérisée en ce que** le réservoir de moyen de nettoyage (40) est un composant de la machine à café également relié, en dehors du mode de nettoyage du dispositif de nettoyage (38), à la machine à café, notamment disposé à l'intérieur du carter de la machine à café, de préférence un bac de réserve dans lequel le moyen de nettoyage fluide peut être accumulé.

3. Machine à café selon l'une quelque des revendications précédentes ou plusieurs d'entre elles, **caractérisée en ce que** la machine à café comporte des moyens permettant de détecter la présence ou l'absence d'un réservoir d'eaux usées positionné en dessous d'un dispositif de distribution (22) de la machine à café, notamment d'un dispositif de distribution pour le lait - notamment monté en mousse -, notamment des moyens comprenant l'au moins un capteur, notamment un contacteur de type Reed entrant en interaction avec un réservoir d'eaux usées réalisé de façon adaptée.

4. Machine à café selon l'une quelconque des revendications précédentes ou plusieurs d'entre elles, que la machine à café, notamment son module pour le lait (10), dispose d'un raccord de bac de lait (35) relié de façon à conduire les fluides directement ou indirectement à un dispositif de moussage (12) permettant de faire mousser le lait, notamment une pièce de couplage rapide adaptée au niveau de laquelle un bac de réserve de lait (20) équipé d'une contrepièce correspondante peut être fixé de façon amovible.

5. Machine à café selon la revendication 4, **caractérisée en ce que** le raccord de bac de lait (35) peut être relié de façon amovible, de façon à conduire les fluides, au raccord de nettoyage (90) du dispositif de nettoyage (38) auquel peut être amené, en mode de nettoyage, le moyen de nettoyage provenant notamment du bac de nettoyage (40) et/ou l'eau provenant notamment de l'élément de production d'eau chaude et/ou de vapeur (28) et/ou du bac intermédiaire (42).

6. Machine à café selon la revendication 5, **caractérisée en ce que** la pièce de couplage rapide du raccord de bac de lait (35) est reliée et/ou peut être reliée au raccord de nettoyage (90) de façon à conduire les fluides au moyen d'une pièce de couplage rapide correspondante du raccord de nettoyage (90) entrant en interaction avec ce dernier afin de réaliser une jonction amovible permettant de conduire les fluides.

7. Machine à café selon l'une quelconque des revendications précédentes ou plusieurs d'entre elles, **caractérisée en ce qu'**un débitmètre (88) permettant de mesurer le débit du moyen de nettoyage et/ou de l'eau provenant du bac intermédiaire (42) en mode de nettoyage est disposé en aval du bac de moyen de nettoyage (40) et/ou en aval du bac intermédiaire (42).

8. Procédé de nettoyage d'une machine à café entièrement automatisée, dans lequel un ou plusieurs, de façon préférée l'ensemble des composants de guidage du lait (35, 36, 18, 30, 12) d'un module pour le lait (10) de la machine à café entièrement automatisée peuvent être nettoyés, en ce que pendant le mode de nettoyage du dispositif de nettoyage (38), un moyen de nettoyage, notamment un produit de nettoyage de lait, est guidé à travers l'au moins un composant de guidage du lait (35, 36, 18, 30, 12), le moyen de nettoyage sortant automatiquement d'un réservoir de moyen de nettoyage (40) propre de la machine à café entièrement automatisée, **caractérisé en ce qu'**en mode de nettoyage, au moins deux processus de nettoyage séparés sont réalisés, au cours d'un premier processus de nettoyage, le moyen de nettoyage, notamment mélangé, de préférence, avec de l'eau chaude, étant guidé au moins à travers un conduit de lait allant d'un bac de réserve dans lequel le lait à aspirer par le module pour le lait est disposé jusqu'à un dispositif de moussage du module pour le lait et au cours d'un processus de nettoyage supplémentaire suivant dans le temps le premier processus de nettoyage, de l'eau chaude, notamment de l'eau chaude non mélangée à du moyen de nettoyage, est guidée à travers le conduit de lait, ladite eau ayant auparavant été chauffée dans un élément de production d'eau chaude et de vapeur (28) de la machine à café entièrement automatisée à une température permettant la désinfection thermique à l'eau chaude du composant de guidage du lait (35, 36, 18, 30, 12), **en ce que** l'eau guidée à travers le composant de guidage du lait (35, 36, 18, 30, 12) provient d'un bac intermédiaire (42) précédemment rempli en eau chaude provenant de l'élément de production d'eau chaude et de vapeur (28) de la machine à café entièrement automatisée, dans le cadre du mode de nettoyage, l'élément de production d'eau chaude et de vapeur (28) étant rempli de multiples fois en eau ensuite amenée dans le bac intermédiaire (42).

9. Procédé selon la revendication 8, **caractérisé en ce qu'**au cours d'un autre processus de nettoyage précédant de préférence dans le temps les deux processus de nettoyage susmentionnés, de l'eau froide est amenée à travers le composant de guidage du lait (35, 36, 18, 30, 12).

10. Procédé selon la revendication 9, **caractérisé en ce qu'**avant, pendant ou après un processus de remplissage, ou plusieurs d'entre eux, de l'élément de production d'eau chaude et de vapeur (28), on ajoute à l'eau un moyen de nettoyage, de sorte que l'élément de production d'eau chaude et de vapeur (28) est rempli en eau à laquelle est mélangé du moyen de nettoyage.

11. Procédé selon l'une quelconque des revendications 8 à 10 ou plusieurs d'entre elles, **caractérisé en ce que** le mode de nettoyage de la machine à café entièrement automatisée peut être déclenché par un utilisateur, notamment par actionnement manuel d'un élément de commande adapté de la machine à café entièrement automatisée, dès lors qu'au moins les deux conditions suivantes sont remplies de façon conjointe :
a) un réservoir d'eaux usées adapté est disposé en dessous d'un dispositif de distribution (22) de la machine à café entièrement automatisée ; et
b) une jonction conduisant les fluides doit être établie entre un raccord de nettoyage (90) de la machine à café entièrement automatisée d'une part, le moyen de nettoyage provenant notamment en mode de nettoyage d'un bac de réserve de moyen de nettoyage (40), ledit moyen de nettoyage étant notamment mélangé à de l'eau ou alimenté en eau, notamment en eau provenant de l'élément de production d'eau chaude et de vapeur (28) et un raccord de bac de réserve de lait (35) de la machine à café entièrement automatisée d'autre part.

12. Procédé selon la revendication 11, **caractérisé en ce que** l'on détecte automatiquement respectivement à l'aide d'un capteur adapté si le réservoir d'eaux usées est disposé en dessous du dispositif de distribution (22) ou si la liaison conduisant les fluides est établie entre le raccord de nettoyage (90) et le raccord de bac de réserve de lait (35).
